# EUROPEAN PATENT APPLICATION

(11) **EP 4 741 267 A1**
(43) Date of publication of application: **13.05.2026**
(21) Application number: 25209553.4
(22) Date of filing: 17.10.2025
(51) Int. Cl.: B62M 1/10, B62M 9/10, F16D 41/24, F16H 55/14, F16H 55/30

(54) **BICYCLE POWER TRANSMISSION DEVICE**

(30) Priority: 06.11.2024 JP 2024194359
(71) Applicant: Exedy Corporation, Neyagawa-shi, Osaka 572-8570 (JP)
(72) Inventor: HARIMA, Kenji, Osaka, 572-8570 (JP)
(74) Representative: KASTEL Patentanwälte PartG mbB

(57) **Abstract**

It is intended to achieve enhancement in strength of a screw portion. The present bicycle power transmission device includes a first rotor, a second rotor, an elastic member, a stopper member, and a first nut. The first rotor includes a stopper surface oriented in a circumferential direction. The second rotor is disposed to be rotatable relative to the first rotor. The elastic member elastically couples the first rotor and the second rotor therethrough to each other. The stopper member is attached to the second rotor. The stopper member includes a stopper portion and a first screw portion. The stopper portion is opposed to the stopper surface in the circumferential direction. The first screw portion is integrated with the stopper portion and extends in an axial direction. The first nut is screwed onto the first screw portion.

## Description

### CROSS-REFERENCE TO RELATED APPLICATIONS

**This** application is based on and claims the priority benefit of Japanese application No. 2024-194359 filed on November 6, 2024, the contents of which are incorporated herein by reference.

### TECHNICAL FIELD

**The** present invention relates to a bicycle power transmission device.

### BACKGROUND

**A** bicycle power transmission device includes a first rotor and a second rotor that are disposed to be rotatable relative to each other. The first and second rotors are elastically coupled to each other through elastic members. The angular range of torsion (relative rotation) between the first and second rotors is restricted by stopper members.

Japan Laid-open Patent Application Publication No. 2024-084007 discloses a bicycle power transmission device that the maximum angle of torsion between the first and second rotors is made changeable by replacing the stopper members. The stopper members are attached to the bicycle power transmission device by bolts for fastening the second rotor in place. Each bolt extends to penetrate the interior of each stopper member.

### SUMMARY OF THE INVENTION

Enhancement in strength of a screw portion of each bolt has been demanded for such a reason as rigidly fastening the second rotor in place. In view of this, it is an object of the present invention to achieve enhancement in strength of the screw portion.

**A** bicycle power transmission device according to a first aspect includes a first rotor, a second rotor, an elastic member, a stopper member, and a first nut. The first rotor includes a stopper surface oriented in a circumferential direction. The second rotor is disposed to be rotatable relative to the first rotor. The elastic member elastically couples the first rotor and the second rotor therethrough to each other. The stopper member is attached to the second rotor. The stopper member includes a stopper portion and a first screw portion. The stopper portion is opposed to the stopper surface in the circumferential direction. The first screw portion is integrated with the stopper portion and extends in an axial direction. The first nut is screwed onto the first screw portion.

According to the configuration, the screw portion is integrated with the stopper portion; hence, the screw portion can be made larger in diameter than that of a bolt extending inside a cylindrical stopper portion as seen in a related art. As a result, it is made possible to achieve enhancement in strength of the screw portion.

A bicycle power transmission device according to a second aspect relates to the bicycle power transmission device according to the first aspect and is configured as follows. The second rotor includes a first through hole. The stopper member includes a first intermediate portion. The first intermediate portion is disposed between the stopper portion and the first screw portion in the axial direction. The first intermediate portion is smaller in outer diameter than the stopper portion and is larger in outer diameter than the first screw portion. The first intermediate portion is disposed inside the first through hole.

A bicycle power transmission device according to a third aspect relates to the bicycle power transmission device according to the second aspect and further includes a sprocket. The sprocket is rotated unitarily with the second rotor. The sprocket includes an engaging hole. The engaging hole overlaps with the first through hole as seen in the axial direction. The first intermediate portion is disposed inside the engaging hole.

A bicycle power transmission device according to a fourth aspect relates to the bicycle power transmission device according to the second or third aspect and is configured as follows. The stopper member includes a constricted portion. The constricted portion is disposed between the first intermediate portion and the first screw portion. According to the configuration, it is made possible to ease a stress acting inside the stopper member.

A bicycle power transmission device according to a fifth aspect relates to the bicycle power transmission device according to any of the second to fourth aspects and is configured as follows. The stopper member includes a constricted portion. The constricted portion is disposed between the stopper portion and the first intermediate portion. According to the configuration, it is made possible to ease a stress acting inside the stopper member.

A bicycle power transmission device according to a sixth aspect relates to the bicycle power transmission device according to any of the first to fifth aspects and is configured as follows. The first nut is a flanged nut.

A bicycle power transmission device according to a seventh aspect relates to the bicycle power transmission device according to any of the first to sixth aspects and is configured as follows. The stopper member includes an engaging portion configured to enable a tool to be engaged therewith.

A bicycle power transmission device according to an eighth aspect relates to the bicycle power transmission device according to any of the first to seventh aspects and further includes a second nut. The second rotor includes a first plate and a second plate. The first plate is disposed on a first side of the first rotor in the axial direction. The second plate is disposed on a second side of the first rotor in the axial direction. The stopper portion is disposed between the first plate and the second plate in the axial direction. The first screw portion is disposed on the first side of the first plate in the axial direction. The stopper member includes a second screw portion. The second screw portion is disposed on the second side of the second plate in the axial direction. The second screw portion is integrated with the stopper portion. The second nut is screwed onto the second screw portion.

A bicycle power transmission device according to a ninth aspect relates to the bicycle power transmission device according to the eighth aspect and is configured as follows. The first plate includes a first through hole. The second plate includes a second through hole. The second through hole overlaps with the first through hole as seen in the axial direction. The stopper member includes a first intermediate portion and a second intermediate portion. The first intermediate portion is disposed between the stopper portion and the first screw portion in the axial direction. The second intermediate portion is disposed between the stopper portion and the second screw portion in the axial direction. Each of the first and second intermediate portions is smaller in outer diameter than the stopper portion and is larger in outer diameter than the first screw portion. The first intermediate portion is disposed inside the first through hole. The second intermediate portion is disposed inside the second through hole.

Overall, according to the present invention, it is made possible to achieve enhancement in strength of a screw portion.

### BRIEF DESCRIPTION OF THE DRAWINGS

FIG. 1 is a cross-sectional view of a power transmission device.
FIG. 2 is a front view of the power transmission device.
FIG. 3 is a side view of a stopper member.
FIG. 4 is a side view of a stopper member according to a modification.

### DETAILED DESCRIPTION

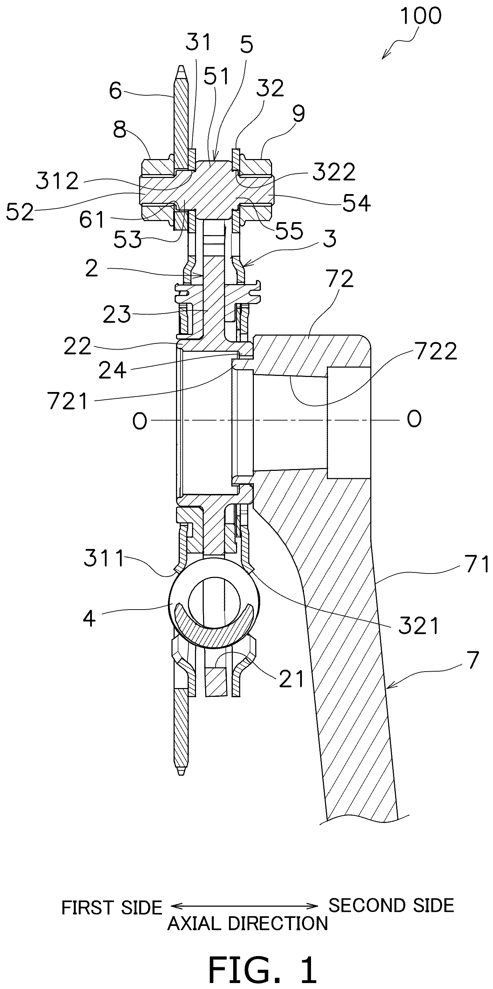

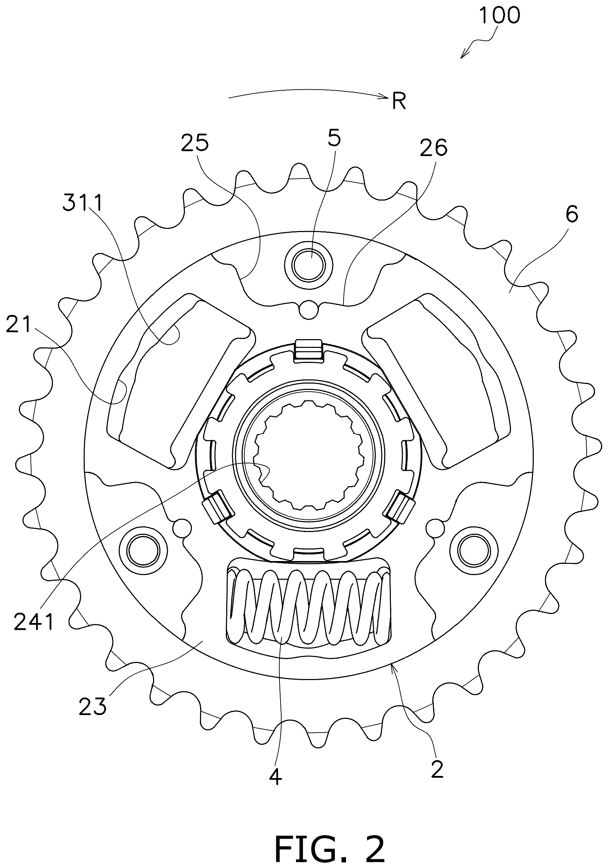

A bicycle power transmission device 100 according to the present preferred embodiment (hereinafter simply referred to as "power transmission device 100" on an as-needed basis) will be hereinafter explained with reference to drawings. It should be noted that in the following explanation, the term "axial direction" refers to an extending direction of a rotational axis O of the power transmission device 100. On the other hand, the term "circumferential direction" refers to a circumferential direction of an imaginary circle about the rotational axis O, whereas the term "radial direction" refers to a radial direction of the imaginary circle about the rotational axis O. The term "first side in the axial direction" indicates the left side in FIG. 1, whereas the term "second side in the axial direction" indicates the right side in FIG. 1. Yet on the other hand, the term "rotational direction R" refers to a direction that the power transmission device 100 is rotated in traveling of a bicycle in which the power transmission device 100 is installed. The rotational direction R indicates the clockwise direction in FIG. 2.

FIG. 1 is a cross-sectional view of the power transmission device 100. As shown in FIG. 1, the power transmission device 100 includes a first rotor 2, a second rotor 3, a plurality of elastic members 4, a plurality of stopper members 5, a sprocket 6, a crank arm 7, a plurality of first nuts 8, and a plurality of second nuts 9. The power transmission device 100 is disposed to be rotatable about the rotational axis O.

The power transmission device 100 is installed in the bicycle. For example, the power transmission device 100 is installed in a type of bicycle without including an electric motor or so forth, i.e., a type of bicycle driven only by a human power. It should be noted that the power transmission device 100 may be installed in another type of bicycle including an electric motor. In this case, for instance, the bicycle may have two modes: an electric mode for driving the bicycle only by the electric motor and a human power mode for driving the bicycle only by the human power. It should be noted that the bicycle may have an assist mode for driving the bicycle by both the electric motor and the human power, or alternatively, may not have the assist mode. The power transmission device 100 is configured to transmit a torque, inputted to a pedal (omitted in illustration) attached to a distal end of the crank arm 7, to a drive wheel (omitted in illustration).

FIG. 2 is a front view of the power transmission device 100 from which some of the elastic members 4, the crank arm 7, and a second plate 32 of the second rotor 3 (to be described) are detached. As shown in FIG. 2, the power transmission device 100 is configured to be rotated in the rotational direction R (clockwise in FIG. 2).

### <First Rotor>

As shown in FIGS. 1 and 2, the first rotor 2 includes a plurality of first accommodation portions 21. It should be noted that in the present preferred embodiment, the first rotor 2 includes three first accommodation portions 21. The first accommodation portions 21 penetrate the first rotor 2 in the axial direction. The first accommodation portions 21 are disposed at intervals in the circumferential direction. The first accommodation portions 21 are disposed at equal intervals.

The first rotor 2 is disposed to be rotatable in the rotational direction R. The first rotor 2 receives the torque inputted thereto from the crank arm 7. The first rotor 2 is configured to be rotated unitarily with the crank arm 7.

The first rotor 2 includes a hub portion 22, an outer flanged portion 23, and an inner flanged portion 24. The hub portion 22 is made in the shape of a cylinder extending in the axial direction. In a condition that the power transmission device 100 has been installed in the bicycle, a crankshaft (omitted in illustration) extends inside the hub portion 22.

The outer flanged portion 23 extends radially outward from the hub portion 22. The outer flanged portion 23 is provided with the first accommodation portions 21. The outer flanged portion 23 is provided on an axially middle part of the hub portion 22.

The inner flanged portion 24 extends radially inward from the hub portion 22. The inner flanged portion 24 includes a spline hole 241 on the inner peripheral surface thereof. The inner flanged portion 24 is provided on one of the axial ends of the hub portion 22. Specifically, the inner flanged portion 24 is provided on the axially second-side end of the hub portion 22. The inner flanged portion 24 is disposed in a different axial position from the outer flanged portion 23. In other words, the inner flanged portion 24 does not overlap with the outer flanged portion 23 as seen in the radial direction.

The first rotor 2 includes a plurality of stopper surfaces 25. When described in detail, the first rotor 2 includes a plurality of cutout portions 26. The cutout portions 26 are disposed at intervals in the circumferential direction. Each cutout portion 26 is disposed between each pair of first accommodation portions 21 in the circumferential direction. Each cutout portion 26 opens radially outward. Among the inner wall surfaces by which each cutout portion 26 is defined, the one oriented in the rotational direction R serves as each stopper surface 25.

Each stopper surface 25 is oriented in the circumferential direction. When described in detail, each stopper surface 25 is oriented in the rotational direction R. Each stopper surface 25 is opposed to each stopper portion 51 at an interval in the circumferential direction.

The first rotor 2 can be made of, for instance, iron, stainless steel, carbon fiber reinforced plastics (CFRP), or so forth.

### <Second Rotor>

The second rotor 3 is disposed to be rotatable in the rotational direction R. The second rotor 3 is disposed to be rotatable relative to the first rotor 2. The second rotor 3 includes a first plate 31 and the second plate 32.

The first and second plates 31 and 32 are disposed away from each other at an interval in the axial direction. The first rotor 2 is disposed between the first and second plates 31 and 32. In other words, the first and second plates 31 and 32 are disposed to interpose the first rotor 2 therebetween in the axial direction. When described in detail, the outer flanged portion 23 of the first rotor 2 is disposed axially between the first and second plates 31 and 32. The first plate 31 is disposed on the first side of the outer flanged portion 23 in the axial direction. The second plate 32 is disposed on the second side of the outer flanged portion 23 in the axial direction.

Each of the first and second plates 31 and 32 has a disc shape and includes an opening in a middle part thereof. The hub portion 22 of the first rotor 2 extends inside the opening of the first plate 31 and that of the second plate 32 in the axial direction.

The first plate 31 includes a plurality of second accommodation portions 311. The second accommodation portions 311 are disposed away from each other at intervals in the circumferential direction. The second plate 32 includes a plurality of third accommodation portions 321. The third accommodation portions 321 are disposed away from each other at intervals in the circumferential direction.

The first plate 31 includes a plurality of first through holes 312. The first through holes 312 are disposed away from each other at intervals in the circumferential direction. The second plate 32 includes a plurality of second through holes 322. The second through holes 322 are disposed away from each other at intervals in the circumferential direction. As seen in the axial direction, the second through holes 322 overlap with the first through holes 312 on a one-to-one correspondence.

The first and second plates 31 and 32 can be made of, for instance, iron, stainless steel, carbon fiber reinforced plastics (CFRP), or so forth.

### <Elastic Members>

The elastic members 4 are accommodated in the first accommodation portions 21, the second accommodation portions 311, and the third accommodation portions 321, respectively. The elastic members 4 are, for instance, coil springs. The elastic members 4 elastically couple the first rotor 2 and both the first and second plates 31 and 32 therethrough to each other in the rotational direction R. In other words, the torque, outputted from the first rotor 2, is transmitted to the first and second plates 31 and 32 through the elastic members 4. Besides, the elastic members 4 are rotated together with the first rotor 2, the first plate 31, and the second plate 32. When the torque is transmitted, the elastic members 4 are compressed, whereby torsion (relative rotation) is caused between the first rotor 2 and the second rotor 3. When the elastic members 4 are not being compressed, the torsion is not caused between the first rotor 2 and the second rotor 3; hence, the angle of torsion is 0 degrees.

### <Sprocket>

The sprocket 6 is attached to the first plate 31. The sprocket 6 is attached to the first plate 31 by the stopper members 5, the first nuts 8, and the second nuts 9. The sprocket 6 is rotated unitarily with the first and second plates 31 and 32. The sprocket 6 includes a plurality of teeth on the outer peripheral end thereof. A chain (omitted in illustration) is wrapped around the sprocket 6, whereby the torque is transmitted from the sprocket 6 to the drive wheel (omitted in illustration) through the chain and so forth.

The sprocket 6 includes a plurality of engaging holes 61. The engaging holes 61 are disposed away from each other at intervals in the circumferential direction. As seen in the axial direction, the engaging holes 61 overlap with not only the first through holes 312 but also the second through holes 322 on a one-to-one correspondence.

### <Stopper Members>

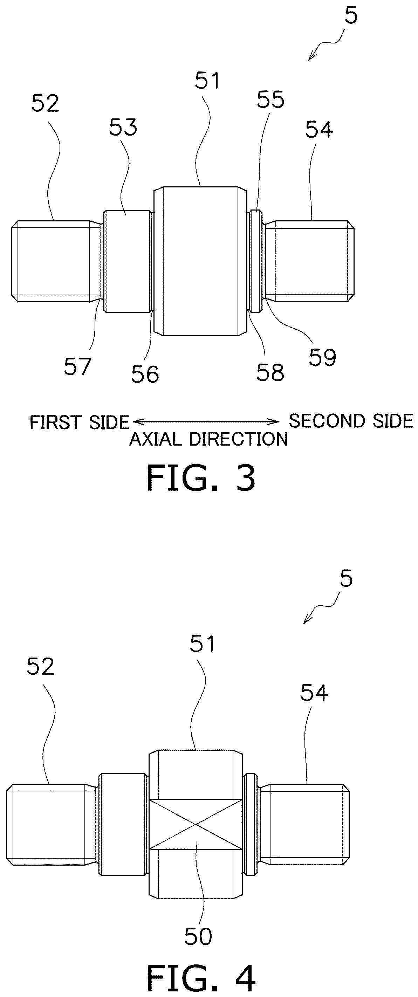

FIG. 3 is a side view of each stopper member 5. As shown in FIGS. 1 and 3, the stopper members 5 fasten the first and second plates 31 and 32 therethrough to each other in cooperation with the first nuts 8 and the second nuts 9 such that the first and second plates 31 and 32 are made detachable from each other. Besides, the sprocket 6 is fastened to the first plate 31 by the stopper members 5 and the first nuts 8. The stopper members 5 are attached to the second rotor 3. The stopper members 5 are configured to be rotated unitarily with the second rotor 3.

Each stopper member 5 includes the stopper portion 51, a first screw portion 52, a first intermediate portion 53, a second screw portion 54, and a second intermediate portion 55. The stopper portion 51, the first screw portion 52, the first intermediate portion 53, the second screw portion 54, and the second intermediate portion 55 are integrated with each other. When described in detail, the stopper portion 51, the first screw portion 52, the first intermediate portion 53, the second screw portion 54, and the second intermediate portion 55 are integrated as a single member. Besides, each stopper member 5 includes first to fourth constricted portions 56 to 59. Each stopper member 5 is solid and the interior thereof is not hollowed out. Each stopper member 5 is made of metal, specifically, steel material. More specifically, each stopper member 5 is made of SWCH45K, S45C, SCM435, or so forth.

The stopper portion 51 has a columnar shape. The stopper portion 51 extends in the axial direction. The stopper portion 51 is opposed to each stopper surface 25 in the circumferential direction. The stopper portion 51 is disposed axially between the first plate 31 and the second plate 32. The stopper portion 51 is sandwiched by the first plate 31 and the second plate 32. The stopper portion 51 is disposed in each cutout portion 26 of the first rotor 2.

The first screw portion 52 is integrated with the stopper portion 51. The first screw portion 52 extends in the axial direction. The first screw portion 52 is provided with threads on the outer peripheral surface thereof. The first screw portion 52 is smaller in outer diameter than the stopper portion 51.

The first screw portion 52 is disposed on the first side of the stopper portion 51 in the axial direction. The first screw portion 52 is disposed on the first side of the first plate 31 in the axial direction. Besides, the first screw portion 52 is disposed on the first side of the sprocket 6 in the axial direction.

The first intermediate portion 53 is disposed axially between the stopper portion 51 and the first screw portion 52. Specifically, the first intermediate portion 53 extends from the stopper portion 51 to the first side in the axial direction. Besides, the first screw portion 52 extends from the first intermediate portion 53 to the first side in the axial direction.

The first intermediate portion 53 has a columnar shape. The first intermediate portion 53 extends in the axial direction. The length of the first intermediate portion 53 is smaller in magnitude than the total thickness of the first plate 31 and the sprocket 6. Besides, the length of the first intermediate portion 53 is larger in magnitude than the thickness of the first plate 31. It should be noted that the length of each portion in each stopper member 5 means the axial dimension thereof.

The first intermediate portion 53 is smaller in outer diameter than the stopper portion 51 but is larger in outer diameter than the first screw portion 52. The first intermediate portion 53 is disposed inside each first through hole 312 and each engaging hole 61. The first intermediate portion 53 does not protrude from inside each first through hole 312 and each engaging hole 61 to the first side in the axial direction.

The second screw portion 54 is integrated with the stopper portion 51. The second screw portion 54 extends in the axial direction. The second screw portion 54 is provided with threads on the outer peripheral surface thereof. The second screw portion 54 is smaller in outer diameter than the stopper portion 51. The second screw portion 54 is approximately equal in outer diameter to the first screw portion 52.

The second screw portion 54 is disposed on the second side of the stopper portion 51 in the axial direction. The second screw portion 54 is disposed on the second side of the second plate 32 in the axial direction.

The second intermediate portion 55 is disposed axially between the stopper portion 51 and the second screw portion 54. Specifically, the second intermediate portion 55 extends from the stopper portion 51 to the second side in the axial direction. Besides, the second screw portion 54 extends from the second intermediate portion 55 to the second side in the axial direction.

The second intermediate portion 55 has a columnar shape. The second intermediate portion 55 extends in the axial direction. The second intermediate portion 55 is smaller in length than the first intermediate portion 53. The length of the second intermediate portion 55 is smaller in magnitude than the thickness of the second plate 32.

The second intermediate portion 55 is smaller in outer diameter than the stopper portion 51 but is larger in outer diameter than the second screw portion 54. The second intermediate portion 55 is approximately equal in outer diameter to the first intermediate portion 53. The second intermediate portion 55 is disposed inside each second through hole 322. The second intermediate portion 55 does not protrude from inside each second through hole 322 to the second side in the axial direction.

The first constricted portion 56 is disposed between the stopper portion 51 and the first intermediate portion 53. The first constricted portion 56 is provided as a portion smaller in outer diameter than each of the stopper portion 51 and the first intermediate portion 53.

The second constricted portion 57 is disposed between the first screw portion 52 and the first intermediate portion 53. The second constricted portion 57 is provided as a portion smaller in outer diameter than each of the first screw portion 52 and the first intermediate portion 53.

The third constricted portion 58 is disposed between the stopper portion 51 and the second intermediate portion 55. The third constricted portion 58 is provided as a portion smaller in outer diameter than the stopper portion 51 and the second intermediate portion 55.

The fourth constricted portion 59 is disposed between the second screw portion 54 and the second intermediate portion 55. The fourth constricted portion 59 is provided as a portion smaller in outer diameter than the second screw portion 54 and the second intermediate portion 55.

### <First and Second Nuts>

Each first nut 8 is screwed onto the first screw portion 52. In cooperation with the stopper portion 51, each first nut 8 interposes and holds the sprocket 6 and the first plate 31 therebetween. Each first nut 8 is a flanged nut.

Each second nut 9 is screwed onto the second screw portion 54. In cooperation with the stopper portion 51, each second nut 9 interposes and holds the second plate 32 therebetween. Each second nut 9 is a flanged nut.

### <Crank Arm>

The crank arm 7 is configured to be rotated unitarily with the first rotor 2. In other words, the crank arm 7 is disposed to be rotatable about the rotational axis O. The crank arm 7 is attached to the inner flanged portion 24 of the first rotor 2. When described in detail, the crank arm 7 is configured to be spline-coupled to the inner flanged portion 24.

The crank arm 7 includes an arm body 71 and an attachment portion 72. The arm body 71 extends in the radial direction. The attachment portion 72 extends from one of both ends of the arm body 71 in the axial direction. It should be noted that the pedal (omitted in illustration) is attached to the other of both ends of the arm body 71.

The attachment portion 72 is smaller in outer diameter at a distal end 721 thereof than at the remaining part thereof. The distal end 721 is spline-coupled to the inner flanged portion 24. Besides, the distal end 721 penetrates the inner flanged portion 24 in the axial direction. Then, the distal end 721 is fixed to the inner flanged portion 24 by swaging. When described in detail, the distal end 721 and the inner flanged portion 24 are firmly attached to each other by swaging of the distal end 721. Besides, a part of the distal end 721, protruding from the inner flanged portion 24 to the first side in the axial direction, is enlarged in outer diameter by swaging; namely, the outer diameter of the protruding part is made larger in magnitude than the inner diameter of the inner flanged portion 24. As a result, the distal end 721 is prevented from coming off from the inner flanged portion 24; hence, the crank arm 7 and the first rotor 2 can be prevented from moving away from each other to the opposite sides in the axial direction.

The attachment portion 72 includes an attachment hole 722. The attachment hole 722 has a rectangular shape as seen in the axial direction. The crankshaft (omitted in illustration) is fitted to the attachment hole 722, whereby the crank arm 7 is rotated unitarily with the crankshaft.

### <Action>

The action of the power transmission device 100 configured as described above will be explained. First, when a torque is inputted to the first rotor 2 through the crank arm 7 by pedaling of a user, the first rotor 2 is rotated in the rotational direction R. Then, the torque is transmitted from the first rotor 2 to the second rotor 3 through the elastic members 4. As a result, the second rotor 3 is rotated in the rotational direction R, whereby the torque is transmitted to the drive wheel.

Here, when the angle of torsion between the first rotor 2 and the second rotor 3 reaches a predetermined angle by compression of the elastic members 4, the stopper surfaces 25 are contacted with the stopper portions 51, respectively. Thus, when the stopper portions 51 are contacted by the stopper surfaces 25, respectively, the first rotor 2 is restricted from rotating relative to the second rotor 3 any further from the position. In other words, the first rotor 2 is rotated relative to the second rotor 3 until the stopper members 5 are contacted by the stopper surfaces 25, respectively. Then, the first rotor 2 is rotated unitarily with the second rotor 3 after the stopper portions 51 are contacted by the stopper surfaces 25, respectively. The angle of torsion between the first rotor 2 and the second rotor 3 is maximized (hereinafter referred to as "maximum angle of torsion") when the stopper surfaces 25 are contacted with the stopper portions 51, respectively. It should be also noted that the angle of torsion between the first rotor 2 and the second rotor 3 is 0 degrees when the torque has not been inputted to the power transmission device 100.

The stopper members 5 are attached to the first and second plates 31 and 32 so as to be replaceable by other stopper members of any suitable type. Specifically, each stopper member 5 is made detachable from the first and second plates 31 and 32 by unscrewing the first and second nuts 8 and 9 therefrom, whereby each stopper member 5 is made replaceable by another stopper member of such a suitable type. It is made possible to change the maximum angle of torsion by the replacement of the stopper members 5.

Stopper members to be used as the stopper members 5 in the power transmission device 100 are selectable from, for instance, a plurality of types of stopper members different in circumferential dimension from each other. When described in detail, stopper members to be used as the stopper members 5 are selectable from a plurality of types of stopper members different in outer diameter from each other. For example, when the stopper members 5 are replaced by stopper members, each of which includes a stopper portion larger in outer diameter than the stopper portion 51 of each stopper member 5, the maximum angle of torsion can be made small. Contrarily, when the stopper members 5 are replaced by stopper members, each of which includes a stopper portion smaller in outer diameter than the stopper portion 51 of each stopper member 5, the maximum angle of torsion can be made large. It should be noted that in the power transmission device 100, the angle of torsion is configured to be maximized before the elastic members 4 are fully compressed.

When the first and second nuts 8 and 9, unscrewed from each replaced stopper member 5, are screwed onto the first and second screw portions 52 and 54 of each newly installed stopper member 5, respectively, it is made possible to easily attach the newly installed stopper members 5 to the first and second plates 31 and 32.

Each elastic member 4 is preferably set to have a spring constant, by which the angle of torsion between the first rotor 2 and the second rotor 3 is maximized when a torque of 100 N·m or less is inputted to the first rotor 2. Besides, each elastic member 4 is preferably set to have a spring constant, by which the angle of torsion between the first rotor 2 and the second rotors 3 is maximized when a torque of 20 N·m or greater is inputted to the first rotor 2. It should be noted that the torque, inputted to the first rotor 2 when the angle of torsion is maximized, will be referred to as "maximum torque". Now, a variety of types of elastic members are prepared as options for the elastic members 4. For example, the variety of types of elastic members are set to be different in spring constant from each other so as to maximize the angle of torsion when the magnitude (N·m) of the maximum torque is approximately each of the following values (albeit not particularly limited thereto): 90, 80, 70, 60, 50, 40, and 30. Then, any of the variety of types of elastic members may be configured to be arbitrarily selected by the user as the elastic members 4.

### [Modifications]

One preferred embodiment of the present invention has been explained above. However, the present invention is not limited to the above, and a variety of changes can be made without departing from the gist of the present invention. It should be noted that basically speaking, respective modifications to be described are applicable simultaneously.
(a) In the preferred embodiment described above, the second rotor 3 includes the first plate 31 and the second plate 32; alternatively, the second rotor 3 may include only the first plate 31. In other words, the second rotor 3 may not include the second plate 32. In this case, each stopper member 5 may not include the second screw portion 54 and the second intermediate portion 55.
(b) In the preferred embodiment described above, each stopper member 5 includes the first intermediate portion 53; alternatively, each stopper member 5 may not include the first intermediate portion 53. In other words, the first screw portion 52 may extend from the stopper portion 51 to the first side in the axial direction. Besides, each stopper member 5 may not include the second intermediate portion 55. In other words, the second screw portion 54 may extend from the stopper portion 51 to the second side in the axial direction.
(c) In the preferred embodiment described above, the sprocket 6 is provided as a member separated from the first plate 31; however, the sprocket 6 may be integrated with the first plate 31 as a single member.
(d) As shown in FIG. 4, each stopper member 5 may include an engaging portion 50. The engaging portion 50 is configured to enable a tool to be engaged therewith. For example, the engaging portion 50 is composed of a pair of flat surfaces provided on the stopper portion 51. When a spanner is locked to the engaging portion 50, it is made possible to prevent each stopper member 5 from rotating when the first and second nuts 8 and 9 are unscrewed from each stopper member 5. It should be noted that the engaging portion 50 may be a hexagonal hole provided on the end surface of each stopper member 5.

### LIST OF REFERENCE NUMERALS

2 First rotor
25 Stopper surface
3 Second rotor
31 First plate
312 First through hole
32 Second plate
322 Second through hole
4 Elastic member
5 Stopper member
50 Engaging portion
51 Stopper portion
52 First screw portion
53 First intermediate portion
54 Second screw portion
55 Second intermediate portion
56 First constricted portion
57 Second constricted portion
6 Sprocket
61 Engaging hole
8 First nut
9 Second nut
100 Bicycle power transmission device

## Claims

1. A bicycle power transmission device comprising:
a first rotor including a stopper surface, the stopper surface oriented in a circumferential direction;
a second rotor disposed to be rotatable relative to the first rotor;
an elastic member elastically coupling the first rotor and the second rotor therethrough to each other;
a stopper member attached to the second rotor, the stopper member including a stopper portion and a first screw portion, the stopper portion opposed to the stopper surface in the circumferential direction, the first screw portion integrated with the stopper portion, the first screw portion extending in an axial direction; and
a first nut screwed onto the first screw portion.

2. The bicycle power transmission device according to claim 1, wherein
the second rotor includes a first through hole,
the stopper member includes a first intermediate portion, the first intermediate portion disposed between the stopper portion and the first screw portion in the axial direction,
the first intermediate portion is smaller in outer diameter than the stopper portion, the first intermediate portion being larger in outer diameter than the first screw portion, and
the first intermediate portion is disposed inside the first through hole.

3. The bicycle power transmission device according to claim 2, further comprising:
a sprocket rotated unitarily with the second rotor, the sprocket including an engaging hole, the engaging hole overlapping with the first through hole as seen in the axial direction, wherein
the first intermediate portion is disposed inside the engaging hole.

4. The bicycle power transmission device according to claim 2, wherein the stopper member includes a constricted portion, the constricted portion disposed between the first intermediate portion and the first screw portion.

5. The bicycle power transmission device according to claim 2, wherein the stopper member includes a constricted portion, the constricted portion disposed between the stopper portion and the first intermediate portion.

6. The bicycle power transmission device according to claim 1, wherein the first nut is a flanged nut.

7. The bicycle power transmission device according to claim 1, wherein the stopper member includes an engaging portion, the engaging portion configured to enable a tool to be engaged therewith.

8. The bicycle power transmission device according to claim 1, further comprising:
a second nut, wherein
the second rotor includes a first plate and a second plate, the first plate disposed on a first side of the first rotor in the axial direction, the second plate disposed on a second side of the first rotor in the axial direction,
the stopper portion is disposed between the first plate and the second plate in the axial direction,
the first screw portion is disposed on the first side of the first plate in the axial direction,
the stopper member includes a second screw portion, the second screw portion disposed on the second side of the second plate in the axial direction, the second screw portion integrated with the stopper portion, and
the second nut is screwed onto the second screw portion.

9. The bicycle power transmission device according to claim 8, wherein
the first plate includes a first through hole,
the second plate includes a second through hole, the second through hole overlapping with the first through hole as seen in the axial direction,
the stopper member includes a first intermediate portion and a second intermediate portion, the first intermediate portion disposed between the stopper portion and the first screw portion in the axial direction, the second intermediate portion disposed between the stopper portion and the second screw portion in the axial direction,
each of the first and second intermediate portions is smaller in outer diameter than the stopper portion, the each of the first and second intermediate portions being larger in outer diameter than the first screw portion,
the first intermediate portion is disposed inside the first through hole, and
the second intermediate portion is disposed inside the second through hole.
